# EUROPEAN PATENT SPECIFICATION

(11) **EP 2 673 937 B1**
(45) Date of publication and mention of the grant of the patent: **24.07.2019**
(21) Application number: 11722864.3
(22) Date of filing: 11.02.2011
(51) Int. Cl.: H04N 21/258, H04N 21/414, H04N 21/61, H04L 29/08

(54) **METHOD FOR INTERACTING BETWEEN AN OPERATOR AND AT LEAST ONE USER**
VERFAHREN ZUR INTERAKTION ZWISCHEN EINEM BENUTZER UND MINDESTENS EINEM VERBRAUCHER
PROCÉDÉ D'INTERACTION ENTRE UN OPÉRATEUR ET AU MOINS UN UTILISATEUR

(43) Date of publication of application: 18.12.2013
(73) Proprietor: Idemia Identity & Security France, 92400 Courbevoie (FR); Telefonica Moviles Espana SA, 28050 Madrid (ES)
(72) Inventor: CRICCO, Rémy, F-75015 Paris (FR); GARCIA, Jose Ignacio Honorato, E-28050 Madrid (ES)
(74) Representative: Cabinet Le Guen Maillet
(86) International application number: PCT/IB2011/000590
(87) International publication number: WO 2012/107793

(56) References cited:
- EP-A1- 2 091 212
- EP-A1- 2 244 452
- WO-A1-2004/084555
- WO-A2-2008/034072
- US-A1- 2008 127 254

## Description

The present invention generally relates to the domain of methods for interacting between an operator of telecommunication network and a user. More precisely it concerns the domain of mobile phones network and TV network.

It is known for a TV network to keep a profile of its subscribers by collecting information about programs actually watched by subscribers, some information about their liking and habits. From these profiles the operator is able to select dedicated content, for example advertisement, targeted for a particular subscriber.

One problem that arises is that one subscription is generally done for a home where are living several people. Therefore the subscriber profile corresponds to a mean of taste and habits of several people without possibility to know who is actually watching a given program in front of the TV.

In this document, we will gather under the generic name of multimedia player all devices able to display broadcasted content. Are comprised the TV sets, personal computers, tablets, netbooks, some game consoles, etc. These multimedia players are able to receive broadcast content on several kinds of networks, like satellite networks, cable networks, or now IP networks like Internet.

Patent application WO2008/034072 discloses the use of device identifiers of nearby terminals to customize the content provided to multimedia players. On one hand, multimedia players are now often connected to the local network in the home with connectivity to other user appliance and to the network and more particularly to the operator service. On another hand, the user is using mobile terminals, like mobile phones, tablet computers or others. These mobile terminals are often able to connect to the mobile phone communication network to get connectivity in mobility and to the local network when being at home.

The invention aims to solve the problem of identifying users actually watching a program on a TV set or alike to be able to distribute to them some accurately targeted content. To achieve this, the connected media player discovers the user terminals also connected to the local network. By obtaining the user id in a secured manner, or not, used by the terminal to connect to the mobile network and sending it to the operator, the latter is able to establish the link between the watched broadcast program and who is actually watching it.

The invention concerns a method for interacting between an operator and at least one user according to claim 1, with further details in the dependent claims.

The invention also concerns a multimedia player to be used in a system for interacting between an operator and at least one user according to claim 6.

The characteristics of the invention will emerge more clearly from a reading of the following description of an example embodiment, the said description being produced with reference to the accompanying drawings, among which:
Fig. 1 illustrates the global architecture of an exemplary embodiment.
Fig. 2 illustrates the architecture of the media player and the terminal of an exemplary embodiment.
Fig. 3 illustrates the method as implemented in the media player in an exemplary embodiment.
Fig. 4 illustrates the method as implemented in the terminal in an exemplary embodiment.

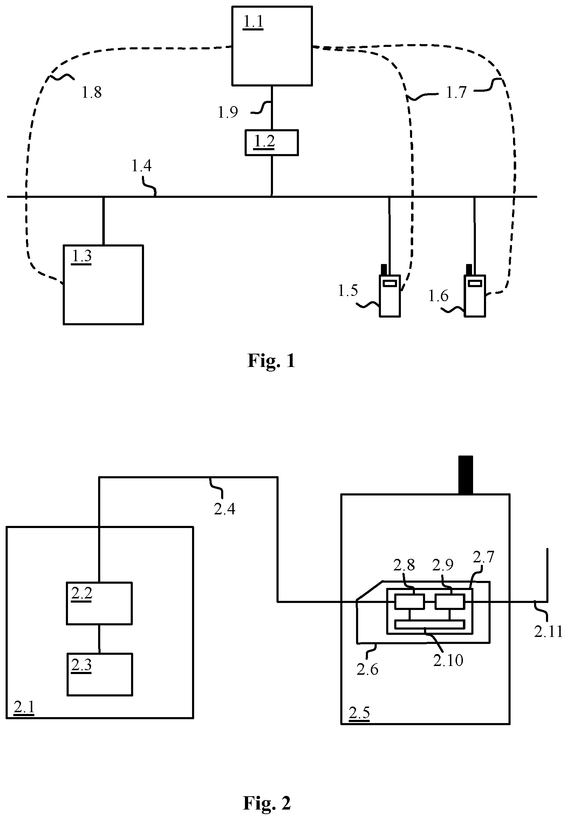

Fig. 1 illustrates the global architecture of the system in an exemplary embodiment. Bloc 1.1 represents the service of the operator. It should be understood what is called the operator in this document. The operator represents one or several operators that are operating networks for the benefit of end users. As the invention implies the use of several kinds of networks, these are operated in a coordinated manner. This coordination could be done by one operator in charge of all these networks or by several operators, each in charge of one or several networks, and working under cooperation agreement. As these aspects are commercial ones and not technical ones, we use the generic term of operator to indicate the plurality of entity in charge of used networks as there was only one operator which could not be always the case. The service of the operator is in charge of a first network, referenced 1.7. This first network is typically the mobile phone network but this is not mandatory. This first network aims at being used in mobility by users terminals 1.5 or 1.6. These terminals are personal mobile terminals that are typically used by only their owner. Some examples of these personal mobile terminals are mobile phones, tablet personal computers, personal digital assistants, game consoles and so on, as soon as they comprise some connection means to connect to the first communication network.

Connection to such network needs credential to establish the connection. In case of typical mobile phone network, a user identifier called IMSI standing for International Mobile Subscriber Identifier is typically used. This user identifier uniquely identifies any mobile phone subscriber on the planet. Each mobile phone network operator is able to link this identifier to the account of its subscribers. The user identifier is typically stored in the smart card holding account credentials called the SIM, standing for Subscriber Identity Module, card used by the terminal.

These terminals are more and more often able to connect to other kinds of communication networks. More specifically, many of these terminals are able today to connect to WLAN networks like WiFi networks. Thanks to these WLAN connection means, they can connect to local home networks like network 1.4 on Fig. 1. Advantageously, the operator can supply its subscribers with WLAN enabled SIM card to ensure that whatever terminal is used, the terminal will have WLAN connectivity thanks to the SIM card itself. This option allows also guaranteeing some security due to the fact that both network interfaces, the mobile network one and the WLAN one, are operated in the same secure component, the SIM card. One example of this kind of SIM card is the "ConnectSIM" card by SAFRAN MORPHO company.

In the user home, the local network 1.4 is typically connected to a generic communication network 1.9, typically the Internet network, using a home gateway 1.2. This generic communication network allows, among others, to connect to the operator service 1.1.

Some media players 1.3 could be also connected to the local network 1.4. These media players, like personal computers, connected TV sets, TV plus set top box sets and so on are able to receive broadcasted multimedia content. The operator broadcasts the content using a broadcast network 1.8. This network can use satellite network, cable network or event IP network. This means that the broadcast network 1.8 can be the generic communication network 1.9.

To be able to send targeted content, like for example advertisement, to their subscribers, the TV operators are used to store profiles of these subscribers. In these profiles they can store preferences, tastes or statistics about usage. The problem is that these profiles are associated to the TV subscriber. Typically, there is one subscription for a home meaning for the whole family.

The exemplary embodiment of the invention is based on the specific implementation shown on Fig. 2. On this figure, one can see the multimedia player 2.1. It comprises WLAN connection means 2.2 to connect to home local network 2.4. These means could consist in an Ethernet plug or WiFi wireless connection means or whatever technology. The multimedia player also comprises a dedicated module 2.3 able to communicate over the local network.

Also connected to the local network is the terminal 2.5, which is typically a mobile phone while it could be a tablet pc for example. In the exemplary embodiment, both WLAN connection means and mobile phone network connection means are embedded in the SIM card 2.6. The electronic component 2.7 of the SIM card comprises the classical secure element 2.9 running telecom applications. The WLAN slave element 2.8 is fully controlled by the secure element 2.9. A Power management system 2.10 is providing energy to the WLAN element, enough to transmit burst over the air.

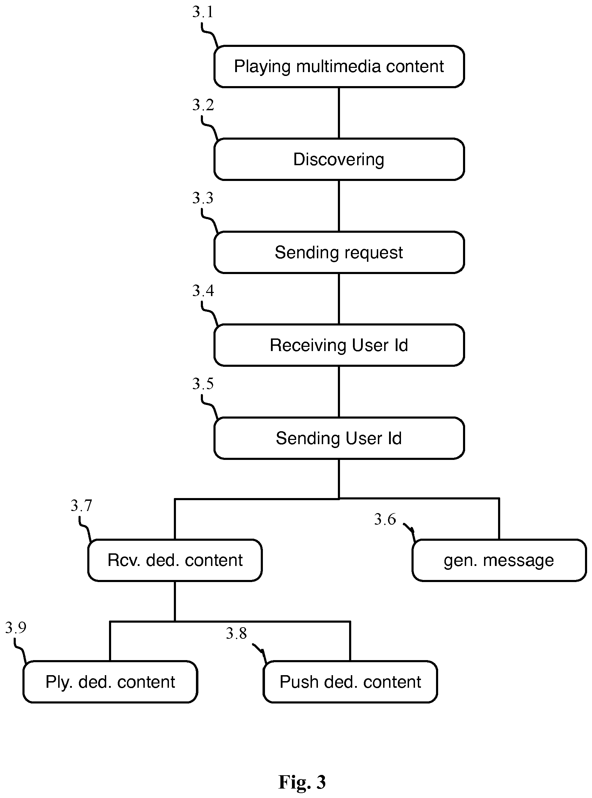

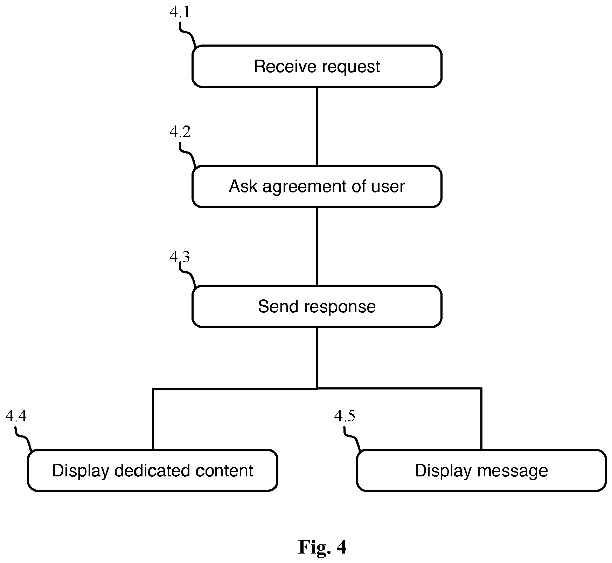

The way the invention is working is explained in relation with Fig. 3 and Fig. 4. At first we suppose that the media player is switched on and is playing a broadcast program. It is playing multimedia content, this is step 3.1. As the media player is connected to the local network, it is able to achieve discovery steps on this network. This is step 3.2. We now suppose that a first user is entering the home and begins to watch the content displayed by the media player. His terminal connects to the local network using its WLAN connection means. Once connected, thanks to the discovering capabilities of the media player, the latter is able to detect the connected terminal in step 3.2. The discovery step is implemented using DLNA (Digital Living Network Alliance) capabilities in the exemplary embodiment. Some other protocols could be used as, for example, the SSDP (Simple Service Discovery Protocol) included in UPnP (Universal Plug and Play) protocols.

When the terminal is discovered, the media player sends a request to the terminal in order to ask for the user identifier used by this terminal on the mobile network, step 3.3. Advantageously in the exemplary embodiment this identifier is the IMSI of the user, but any user identifier allowing the operator to uniquely identify the actual user owning the terminal could be used.

When receiving the request in step 4.1, the terminal may ask the user in step 4.2 if he gives his agreement to the sending of its identifier to the media player and therefore to the operator service. This could be done by asking him if he wants to connect to the service. If he refuses, then the process stops there. If he gives his agreement, then the terminal sends its response containing the identifier in step 4.3 back to the media player. Depending on the politic implemented by the operator, the response could be sent directly in silent mode without asking the user for his agreement. In some cases also, the agreement could be asked for once and after while, the response is given silently automatically each time the media player is asking for it.

Furthermore, the user agreement delivery can be more secured and then the user will have to enter a password to unlock the service. Advantageously, for example to secure access to sensitive services, a strong mutual authentication could be required between the multimedia player and the terminal before allowing the terminal to send the user ID to the player.

When receiving this response containing the user identifier in step 3.4, the media player is sending it back to the operator service in step 3.5. This communication is using typically the generic communication network 1.9 but is not limited to. Advantageously this message could also contain some information like the program actually displayed by the media player. This way, the operator gets the information on who is actually watching the program in front of the media player.

The operator could use this information in many ways. The first option is to consolidate the user profile with the information on the program he is watching. The second option is to use his profile to select dedicated content targeted for the user. This could be some advertisement related to the program or to the taste of the user. The media player then receives the dedicated content sent by the operator in step 3.7. Depending on the kind of content, the media player could display the dedicated content on the screen, step 3.9 or push the dedicated content to the terminal in step 3.8.

In some use cases, the media player could also generate some messages, step 3.6, for the user to be displayed on the terminal. For example, the media player can generate some short text messages, like SMS, to be sent to the terminal in some interaction scenario.

Alternatively, the operator can also send the dedicated content or some messages directly to the terminal using the mobile phone network.

When receiving the dedicated content from the media player or directly from the operator, the terminal displays it in step 4.4.

When receiving some messages from the media player or from the operator, the terminal displays the message in step 4.5.

This interaction method could be used, as explained to send targeted advertisement, but it could also be used to achieve interaction related to the broadcast program. For example, it could be used to propose some bet to the user related to a sport program or to propose some product to buy related to the program and so on.

## Claims

1. Method for interacting between an operator and at least one user, the operator operating a first communication network (1.7), the user owning a terminal (1.5, 1.6) to connect to said first communication network (1.7) using a user identifier, the operator operating a broadcast network (1.8, 1.9) to broadcast multimedia content to multimedia players (1.3), said multimedia players (1.3) and said terminal (1.5, 1.6) being able to connect to a local network (1.4), said local network being connected to the operator using a second communication network (1.9), comprising following steps by a multimedia player (1.3) connected to the local network (1.4):
- a step (3.1) of playing broadcast multimedia content sent by the operator;
- a step (3.2) of discovering at least one user terminal connected to the local network;
- a step (3.3) of sending a request for a user identifier to discovered user terminal;
- a step (3.4) of receiving from discovered user terminal the user identifier used by the terminal to connect to said first communication network;
- a step (3.5) of sending to the operator said user identifier by the second communication network;
- a step (3.7) of receiving dedicated content from the operator targeted for the user identified by said sent identifier;
- a step (3.9) of displaying said received dedicated content;
- a step (3.8) of pushing said received dedicated content to the terminal.

2. Method according to claim 1, **characterized in that** it further comprises by the multimedia player connected to the local network:
- a step (3.6) of generating a message related to said received dedicated content on the terminal.

3. Method according to one of claims 1 or 2, **characterized in that** it further comprises by the multimedia player connected to the local network:
- a step of sending to the operator information related to the displayed multimedia content associated with the obtained user identifier.

4. Method according to claim 3, **characterized in that** it further comprises:
- a step (4.4) of displaying on the terminal dedicated content received from said multimedia player.

5. Method according to claim 3, **characterized in that** it further comprises:
- a step (4.4) of displaying dedicated content received from the operator via the first communication network.

6. Multimedia player to be used in a system for interacting between an operator and at least one user, the operator operating a first communication network, the user owning a terminal to connect to said first communication network using a user identifier, the operator operating a broadcast network to broadcast multimedia content to said multimedia players, said multimedia players and said terminal being able to connect to a local network, said local network being connected to the operator using a second communication network, comprising:
- means for playing broadcast multimedia content sent by the operator;
- means for discovering at least one user terminal connected to the local network;
- means for sending a request for a user identifier to discovered user terminal;
- means for receiving from discovered user terminal the user identifier used by the terminal to connect to said first communication network;
- means for receiving dedicated content from the operator targeted for the user identified by said sent identifier;
- means for sending to the operator said user identifier by the second communication network;
- means for displaying said received dedicated content; and,
- means for pushing said received dedicated content to the terminal.

## Patentansprüche

1. Verfahren zum Interagieren zwischen einem Betreiber und mindestens einem Benutzer, wobei der Betreiber ein erstes Kommunikationsnetzwerk (1.7) betreibt, wobei der Benutzer ein Endgerät (1.5, 1.6) besitzt, um sich unter Verwendung einer Benutzerkennung mit dem ersten Kommunikationsnetzwerk (1.7) zu verbinden, wobei der Betreiber ein Rundsendenetzwerk (1.8, 1.9) betreibt, um einen Multimediainhalt an Multimediaplayer (1.3) rundzusenden, wobei die Multimediaplayer (1.3) und das Endgerät (1.5, 1.6) in der Lage sind, sich mit einem lokalen Netzwerk (1.4) zu verbinden, wobei das lokale Netzwerk unter Verwendung eines zweiten Kommunikationsnetzwerks (1.9) mit dem Betreiber verbunden ist, folgende Schritte durch einen Multimediaplayer (1.3), der mit dem lokalen Netzwerk (1.4) verbunden ist, umfassend:
- einen Schritt (3.1) des Wiedergebens von rundgesendetem Multimediainhalt, der vom Betreiber gesendet wird;
- einen Schritt (3.2) des Entdeckens von mindestens einem Benutzerendgerät, das mit dem lokalen Netzwerk verbunden ist;
- einen Schritt (3.3) des Sendens einer Anforderung einer Benutzerkennung an das entdeckte Benutzerendgerät;
- einen Schritt (3.4) des Empfangens der Benutzerkennung, die vom Endgerät verwendet wird, um sich mit dem ersten netzwerk zu verbinden, vom entdeckten Benutzerendgerät;
- einen Schritt (3.5) des Sendens der Benutzerkennung durch das zweite Kommunikationsnetzwerk an den Betreiber;
- einen Schritt (3.7) des Empfangens von dediziertem Inhalt, der für den Benutzer vorgesehen ist, der durch die gesendete Kennung identifiziert wird, vom Betreiber;
- einen Schritt (3.9) des Anzeigens des empfangenen dedizierten Inhalts;
- einen Schritt (3.8) des Leitens des empfangenen dedizierten Inhalts zum Endgerät.

2. Verfahren nach Anspruch 1, **dadurch gekennzeichnet, dass** es ferner Folgendes durch den Multimediaplayer, der mit dem lokalen Netzwerk verbunden ist, umfasst:
- einen Schritt (3.6) des Erzeugens einer Nachricht, die den empfangenen dedizierten Inhalt auf dem Endgerät betrifft.

3. Verfahren nach einem der Ansprüche 1 oder 2, **dadurch gekennzeichnet, dass** es ferner Folgendes durch den Multimediaplayer, der mit dem lokalen Netzwerk verbunden ist, umfasst:
- einen Schritt des Sendens von Informationen, die den angezeigten Multimediainhalt, der mit der erhaltenen Benutzerkennung verknüpft ist, betreffen, an den Betreiber.

4. Verfahren nach Anspruch 3, **dadurch gekennzeichnet, dass** es ferner Folgendes umfasst:
- einen Schritt (4.4) des Anzeigens von dediziertem Inhalt, der vom Multimediaplayer empfangen wird, auf dem Endgerät.

5. Verfahren nach Anspruch 3, **dadurch gekennzeichnet, dass** es ferner Folgendes umfasst:
- einen Schritt (4.4) des Anzeigens von dediziertem Inhalt, der via das erste Kommunikationsnetzwerk vom Betreiber empfangen wird.

6. Multimediaplayer der in einem System zum Interagieren zwischen einem Betreiber und mindestens einem Benutzer zu verwenden ist, wobei der Betreiber ein erstes Kommunikationsnetzwerk betreibt, wobei der Benutzer ein Endgerät besitzt, um sich unter Verwendung einer Benutzerkennung mit dem ersten Kommunikationsnetzwerk zu verbinden, wobei der Betreiber ein Rundsendenetzwerk betreibt, um einen Multimediainhalt an die Multimediaplayer rundzusenden, wobei die Multimediaplayer und das Endgerät in der Lage sind, sich mit einem lokalen Netzwerk zu verbinden, wobei das lokale Netzwerk unter Verwendung eines zweiten Kommunikationsnetzwerks mit dem Betreiber verbunden ist, Folgendes umfassend:
- Mittel zum Wiedergeben von rundgesendetem Multimediainhalt, der vom Betreiber gesendet wird;
- Mittel zum Entdecken von mindestens einem Benutzerendgerät, das mit dem lokalen Netzwerk verbunden ist;
- Mittel zum Senden einer Anforderung einer Benutzerkennung an das entdeckte Benutzerendgerät;
- Mittel zum Empfangen der Benutzerkennung, die vom Endgerät verwendet wird, um sich mit dem ersten netzwerk zu verbinden, vom entdeckten Benutzerendgerät;
- Mittel zum Empfangen von dediziertem Inhalt, der für den Benutzer vorgesehen ist, der durch die gesendete Kennung identifiziert wird, vom Betreiber;
- Mittel zum Senden der Benutzerkennung durch das zweite netzwerk an den Betreiber;
- Mittel zum Anzeigen des empfangenen dedizierten Inhalts und
- Mittel zum Leiten des empfangenen dedizierten Inhalts zum Endgerät.

## Revendications

1. Procédé d'interaction entre un opérateur et au moins un utilisateur, l'opérateur exploitant un premier réseau de communication (1.7), l'utilisateur possédant un terminal (1.5, 1.6) pour se connecter audit premier réseau de communication (1.7) en utilisant un identifiant d'utilisateur, l'opérateur exploitant un réseau de diffusion (1.8, 1.9) pour diffuser du contenu multimédia sur des lecteurs multimédia (1.3), lesdits lecteurs multimédia (1.3) et ledit terminal (1.5, 1.6) pouvant se connecter à un réseau local (1.4), ledit réseau local étant connecté à l'opérateur à l'aide d'un second réseau de communication (1.9), comprenant les étapes suivantes effectuées par un lecteur multimédia (1.3) connecté au réseau local (1.4) :
- une étape (3.1) de lecture d'un contenu multimédia diffusé envoyé par l'opérateur ;
- une étape (3.2) de découverte d'au moins un terminal d'utilisateur connecté au réseau local ;
- une étape (3.3) d'envoi d'une demande d'identifiant d'utilisateur au terminal d'utilisateur découvert ;
- une étape (3.4) de réception du terminal d'utilisateur découvert de l'identifiant d'utilisateur utilisé par le terminal pour se connecter audit premier réseau ;
- une étape (3.5) d'envoi à l'opérateur dudit identifiant d'utilisateur par le second réseau de communication ;
- une étape (3.7) de réception d'un contenu dédié de l'opérateur destiné à l'utilisateur identifié par ledit identifiant envoyé ;
- une étape (3.9) d'affichage dudit contenu dédié reçu ;
- une étape (3.8) consistant à pousser ledit contenu dédié reçu vers le terminal.

2. Procédé selon la revendication 1, **caractérisé en ce qu'**il comprend en outre par le lecteur multimédia connecté au réseau local :
- une étape (3.6) de génération d'un message concernant ledit contenu dédié reçu sur le terminal.

3. Procédé selon l'une des revendications 1 ou 2, **caractérisé en ce qu'**il comprend en outre par le lecteur multimédia connecté au réseau local :
- une étape d'envoi à l'opérateur des informations relatives au contenu multimédia affiché associé à l'identifiant d'utilisateur obtenu.

4. Procédé selon la revendication 3, **caractérisé en ce qu'**il comprend en outre :
- une étape (4.4) d'affichage sur le terminal d'un contenu dédié reçu dudit lecteur multimédia.

5. Procédé selon la revendication 3, **caractérisé en ce qu'**il comprend en outre :
- une étape (4.4) d'affichage de contenu dédié reçu de l'opérateur via le premier réseau de communication.

6. Lecteur multimédia à utiliser dans un système d'interaction entre un opérateur et au moins un utilisateur, l'opérateur exploitant un premier réseau de communication, l'utilisateur possédant un terminal pour se connecter audit premier réseau de communication à l'aide d'un identifiant d'utilisateur, l'opérateur réseau de diffusion pour diffuser un contenu multimédia auxdits lecteurs multimédia, lesdits lecteurs multimédia et ledit terminal pouvant se connecter à un réseau local, ledit réseau local étant connecté à l'opérateur à l'aide d'un second réseau de communication, comprenant :
- des moyens pour lire le contenu multimédia diffusé envoyé par l'opérateur ;
- des moyens pour découvrir au moins un terminal d'utilisateur connecté au réseau local ;
- des moyens pour envoyer une demande d'identifiant d'utilisateur au terminal d'utilisateur découvert ;
- des moyens pour recevoir du terminal d'utilisateur découvert l'identifiant d'utilisateur utilisé par le terminal pour se connecter audit premier réseau ;
- des moyens pour recevoir un contenu dédié de l'opérateur ciblé pour l'utilisateur identifié par ledit identifiant envoyé ;
- des moyens pour envoyer à l'opérateur ledit identifiant d'utilisateur par le second réseau de communication ;
- des moyens pour afficher ledit contenu dédié reçu; et,
- des moyens pour pousser ledit contenu dédié reçu vers le terminal.
